Europäisches Patentamt

European Patent Office

Office européen des brevets

(11) Veröffentlichungsnummer: **0 072 434**
**A1**

## (12) EUROPÄISCHE PATENTANMELDUNG

(21) Anmeldenummer: **82106349.2**

(22) Anmeldetag: **15.07.82**

(51) Int. Cl.³: **A 47 J 31/20**
**A 47 J 31/14**

(30) Priorität: **11.08.81 DE 3131724**

(43) Veröffentlichungstag der Anmeldung:
**23.02.83 Patentblatt 83/8**

(84) Benannte Vertragsstaaten:
**AT BE CH FR GB IT LI LU NL SE**

(71) Anmelder: **Nibbe, Bodo Bernd**
**Karlsplatz 6/IV**
**D-8000 München 2(DE)**

(71) Anmelder: **Hirsch, Paul**
**Karl-Theodor-Strasse 91**
**D-8000 München 40(DE)**

(72) Erfinder: **Nibbe, Bodo Bernd**
**Karlsplatz 6/IV**
**D-8000 München 2(DE)**

(72) Erfinder: **Hirsch, Paul**
**Karl-Theodor-Strasse 91**
**D-8000 München 40(DE)**

(74) Vertreter: **Hasse, Wilhelm Dr.**
**Asamstrasse 8**
**D-8000 München 90(DE)**

(54) Vorrichtung für Kaffeekannen.

(57) Vorrichtung für Kaffeekannen, wobei ein feinmaschiges, wasserdurchlässiges geeignetes Material (7) so vor den Ausgießer (8,12) gesetzt ist, daß dieses Siebmaterial beim Ausgießen der Kaffeeflüssigkeit filterähnlich wirksam wird.

FIG.1

EP 0 072 434 A1

Croydon Printing Company Ltd.

Rechtsanwalt Bodo Bernd Nibbe,
Karlsplatz 6/IV, 8000 München 2

Paul Hirsch, Karl-Theodor-Straße 91,
8000 München 40

## Vorrichtung für Kaffeekannen

Die Erfindung betrifft eine Vorrichtung für Kaffeekannen
sowie eine teilweise Ausbildung der Kaffeekanne selber.

Kaffeetrinker haben verschiedene Methoden, um sich ihr Getränk herzustellen. In früheren Zeiten wurde der gemahlene
oder zerriebene Kaffee in ein Gefäß eingefüllt und kochendes Wasser darüber geschüttet. Nach einigen Minuten war
das Getränk fertig. Nachteilig hierbei ist, daß einmal
Kaffeesatz beim Füllen mit in das Trinkgefäß (Tasse) gelangt und zum anderen der gemahlene Kaffee nicht ergiebig
genug ausgenutzt wurde. Daher ging man zum sogenannten
Filtern über. Allerdings wird auch hier der gemahlene Kaffee nicht ergiebig genug ausgenutzt und zum anderen ist
der Filtervorgang eine langweilige Angelegenheit, weil immer nur eine ganz bestimmte Wassermenge in das Filtergerät
eingefüllt werden kann, d.h. das Wasser muß über eine längere Zeit (bei zehn Tassen Kaffee z.B. fünf bis sechs Minuten) kochend gehalten werden, was zusätzlichen Energieverlust bedeutet. Während dieser Zeit kühlt das
durchzufilternde Wasser ab, so daß man die Kaffeekanne
warmhalten, z.B. in warmes Wasser stellen muß.

Nun gibt es Filtrierkannen allgemeiner Art, um Rückstände beim Ausgießen aufzufangen. Eine solche Kanne
ist für die Kaffeeherstellung ungeeignet. Ferner kennt
man Kannen mit einem der Ausgießtülle vorgeschalteten
mit gemahlenem Kaffee füllbaren perforierten Behälter,
durch den das auszugießende heiße Wasser geleitet
wird; gleichwirkend kann man diesen perforierten Behälter auch am
Deckel oder im Deckel einer Kaffeekanne unterbringen.
Schließlich sind auch der Ausgießtülle vorgeschaltete
Siebe bekannt, um beim Gießen Rückstände aufzufangen.
Einen aus mehreren Teilen zusammenschraubbaren Filter
kann man durch den Deckel mittels Stab in die Kaffeekanne einführen, um     im Bodenbereich befindlichen
Kaffee von der darüber befindlichen Flüssigkeit zu
eliminieren, d.h. ein Ausgießen des Kaffeesatzes zu
unterbinden. Alle genannten Vorrichtungen haben den
Nachteil, daß sie dazu dienen, lediglich Rückstände
in der Kanne zu belassen, ohne eine intensivste Ausnutzung der Kaffeesubstanz zu gewährleisten.

Alle diese Nachteile beseitigt die erfindungsgemäße
Vorrichtung, wobei die Aufgabe gestellt ist, kurzfristig
bei optimal ergiebiger Auswertung des gemahlenen bzw.
pulverisierten Kaffees ein Kaffeegetränk zu erstellen,
das eine verbesserte Qualität gegenüber allen herkömmlichen Methoden darstellt.

Gelöst wird die gestellte Aufgabe durch die kennzeichnenden Merkmale von Anspruch 1, 7, 8, 10, 13 und die
der Unteransprüche.

Durch die Erfindung wird die Aufgabe optimalst deshalb
gelöst, weil jetzt zwei Kaffeevorbereitungsvorgänge in
einem durchgeführt werden, nämlich in althergebrachter
Weise wird Kaffee durch Eingießen des heißen Wassers
auf den sich im Bodenbereich befindlichen gemahlenen
Kaffee aufgegossen, wobei der Kaffee nicht durch zusätzliche Behälter abgeteilt ist. Zusätzlich wird
ein Filtervorgang, jedoch in umgekehrter
Richtung, nämlich unmittelbar beim Ausgießen bereits
vorbereiteten Kaffees erreicht, wobei das als Filter
vorgeschaltete Material im Sinne des sonst bekannten
Filters (wobei das Wasser von oben kommend durch den
im Filter gehaltenen Kaffee zeitaufwendig hindurchgeleitet wird) zum echten Filtern dient. Hier liegt die
Kombination des Aufgießens und des Filterns vor.

- 4 -

Wenn von "Material" gesprochen wird, dann ist jedes
poröse Material gemeint, das zur physikalischen Trennung fester Stoffe aus Flüssigkeiten dient, beispielsweise kann es sich dabei um feinstmaschige Siebgeflechte handeln (also keine weitmaschigen bekannten
Siebe, um Rückstände aufzufangen). Verwendbar sind geeignete Papier- und Tuchmaterialien, wobei auch mehrere
unterschiedliche Materialien gemeinsam, z.B. übereinandergelegt, Verwendung finden können. Dieses Material
ist wasserdurchlässig. Dabei sollte die Durchflußleistung weitgehendst verzögerungsfrei sein.

Weitere Einzelheiten der Erfindung ergeben sich aus der Zeichnung und Beschreibung, und zwar zeigt:

Fig. 1 die prinzipielle Anordnung des Materials im Kannenkopf,

Fig. 2 im Querschnitt verschiedene Arten von geformtem Material,

Fig. 3 die Verbindung des Materials im Abstand zum Deckel,

Fig. 4 die Anordnung des Materials im Inneren einer Kanne,

Fig. 5 ebenfalls die Anordnung des Material im Inneren einer Kanne, wobei zusätzlich ein Bodensieb vorgesehen ist,

Fig. 6 in Aufsicht Material, hier in Form eines feinstmaschigen Siebes, das in einem Rahmen eingespannt ist und

Fig. 7 im Schnitt eine Halterung für das Material, die in eine Kanne einsetzbar ist.

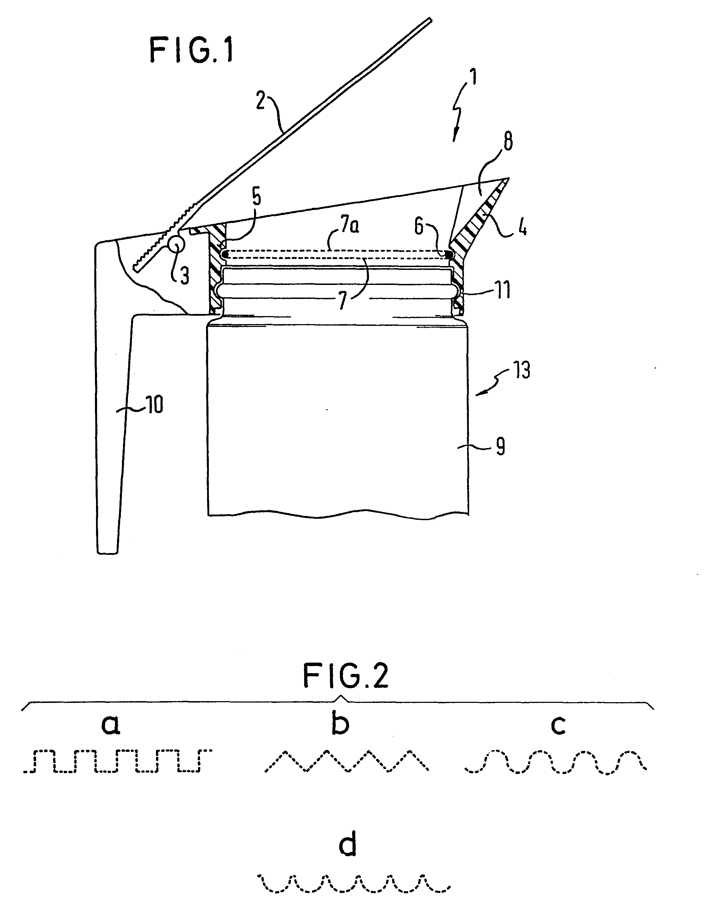

Fig. 1 zeigt schematisch einen Behälter 9, der zur Aufnahme des gemahlenen bzw. pulverisierten Kaffees und des heißen Wassers dient. Aufgesetzt ist ein Kannenkopf 1, der im gezeigten Beispiel durch eine Manschette 11 auf dem Behälter 9 gehalten ist; die Manschette 11 besteht aus umlaufendem, elastischem Material (z.B. Gummi usw.) und umgreift das Gefäß 9, wobei am Gefäß 9 auch eine umlaufende, nach außen weisende Wulst vorgesehen sein kann, um der Manschette 11 einen besseren Festsitz zu gewährleisten.

Der Kannenkopf 1 kann mit einem klappbaren Deckel 2 versehen sein, der in einem Lager 3 teildrehbar vorgesehen ist. In einer Ebene des Kannenkopfes 1 ist eine umlaufende Nut 5 eingearbeitet. In diese Nut 5 ist ein Rahmen 6 eingelegt, der wenigstens im Peripheriebereich elastisch ist, so daß er durch leichtes Deformieren in die Nut 5 hineingepreßt werden kann. Im umlaufenden Rahmen (hier rund) ist feinstmaschiges Siebmaterial eingespannt.

Die Kaffeeflüssigkeit wird erfindungsgemäß wie folgt hergestellt. Der gemahlene Kaffee und das heiße Wasser werden in den Behälter 9 hineingegeben. Nachfolgend wird der Kannenkopf 1 aufgesetzt und nun kann Flüssigkeit über den Ausgießer 8 ausgegossen werden. Bekanntlich schwimmt beim Auffüllen von heißem Wasser der gemahlene Kaffee auf und setzt sich erst nach längerer Zeit. Der Kaffeesatz legt sich beim Ausgießen innen im Bereich des Ausgießers 8 gegen das Material 7, 7a, kann also nicht in das Trinkgefäß gelangen. Durch das Anlagern am Material 7, 7a ergibt sich beim Ausgießen ein zusätzlicher Filterungsprozeß, wie er beim Filtern von Kaffee bekannt ist. Selbst wenn das Material 7, 7a im Bereich der Ausgießtülle 8 allmählich zugesetzt wird, bestehen keine Schwierigkeiten, die Flüssigkeit auszugießen, weil dann links vom Ausgießer 8 das Material 7, 7a nicht zugesetzt ist.

Im gezeigten Beispiel nach Fig. 1 sind zwei Materialschich-

ten 7 sowie 7a vorgesehen. Es genügt aber auch eine Materialschicht und im gezeigten Beispiel könnte die Materialschicht 7 etwas weniger feinmaschig als die Materialschicht 7a sein.

Statt der hier gewählten Manschette 11 können auch Gewinde sowohl am Behälter 9 als auch am Kannenkopf 1 vorgesehen sein, so daß man durch Aufschrauben den Kannenkopf 1 befestigen kann.

Im gezeigten Beispiel ist der Rahmen 6 auswechselbar vorgesehen. Man könnte das Material aber auch fest einsetzen, denn das Reinigen bereitet keine Schwierigkeiten.

Querschnittsformen des Materials sind in Fig. 2 dargestellt. In Fig. 2a handelt es sich um aneinandergereihte U-Formen, in Fig. 2b ist das Material spitzwinklig (zick-zack-förmig) ausgerichtet, in Fig. 2c ist das Material wellenlinienförmig dargestellt, wobei diese Wellenlinie in Ringform oder linear verlaufen kann und in Fig. 2d besteht das Material aus aneinandergereihten Bogen.

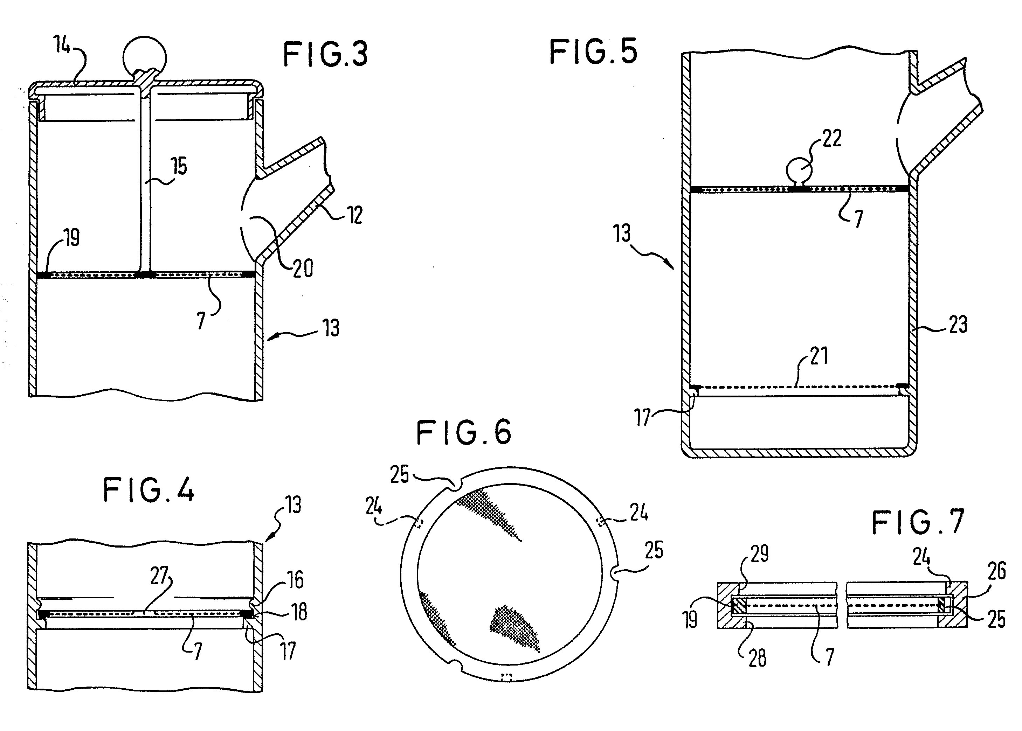

Eine etwas abgewandelte Kannenform mit Vorrichtung zeigt Fig. 3. Am Deckel 14 ist ein Stab 15 vorgesehen, der einen Rahmen 19 mit Material 7 trägt. Erfindungsgemäß kommt es also immer darauf an, daß der Ausgießer 12 bzw. die Eintrittsöffnung des Gießers 12 höher liegt als das Material 7.

Dadurch ergibt sich nämlich ein gegenläufiger Filtereffekt zur bekannten Filterung, weil hier nicht das
heiße Wasser durch den mit Kaffee gefüllten Filter
läuft, sondern der gemahlene Kaffee und das heiße Wasser
in den Behälter eingefüllt werden und erst beim Ausgießen (Rücklauf des Wassers) eine Filterung vorgenommen
wird.

Fig. 4 zeigt schematisch, wie man das Material 7 mit dem
zugeordneten Rahmen festsetzen kann, beispielsweise indem
man eine Nut 18 bildet, und zwar durch umlaufende, im Abstand zueinander vorgesehene Wülste 16, 17, wobei diese
unterschiedliche Querschnittsformen haben können. Die
Querschnittsform der Wulst 16 ist beispielsweise halbbogenförmig und die der Wulst 17 U-förmig. Es ist auch angedeutet, daß z.B. mittig oder seitlich eine verschließbare Öffnung 27 vorgesehen sein kann. Durch diese Öffnung
könnte man den gemahlenen Kaffee und das Wasser eingießen, so daß man das Material 7 nicht entfernen muß. Nachfolgend wird die Öffnung 27 mit bekannten Mitteln verschlossen, wobei man zum Verschließen zweckmäßig das
gleiche oder ein gleichwertiges feinporöses Material
verwendet, z.B. als Deckel, Platte oder dgl. ausgebildet.

In Fig. 5 ist gezeigt, daß am Material 7 auch ein Handgriff 22 vorgesehen sein kann. Im unteren Bereich ist
z.B. ein Bodensieb 21 eingelegt. Auf diesem Bodensieb, das ebenfalls innen an der Kanne befestigt ist, z.B. durch Auflage auf eine umlaufende Wulst 17, wird der gemahlene Kaffee aufgeschüttet. Er bleibt dann nicht am Boden liegen und das darunter befindliche Wasser (im unteren Raum also) hebt den Kaffee beim Ausgießen noch einmal an und durchwirbelt ihn besser als dies bei Auflage auf dem Kannenboden geschieht.

In Aufsicht zeigt Fig. 6 einen Rahmen, in dem ein feinstmaschiges Sieb eingespannt ist. Im Verlauf der Peripherie sind Ausnehmungen 25 angebracht. Bringt man die Ausnehmungen 25 über die Nocken 24, die innen an der Kanne 13 vorgesehen sind, dann kann man den Rahmen einführen; er wird dann verdreht, so daß die Nocken 24 seitlich (wie in Fig. 6 gezeigt) zu den Ausnehmungen 25 liegen, so daß der Rahmen nicht herausrutschen kann. Eine solche Anordnung ist beispielsweise in der später noch beschriebenen Fig. 7 gewählt worden.

Verwendet man diese Ausführungsform nach Fig. 6 beispielsweise in Fig. 4, dann braucht der Rahmen nicht elastisch zu sein (damit er über die umlaufende Wulst 16 geschoben werden kann), weil die umlaufende Wulst 16 durch drei Nocken 24 ersetzt ist. Statt der in Fig. 6 gewählten drei Ausnehmungen 25 mit den zugeordneten drei Nocken 24 können natürlich auch vier oder noch mehr Ausnehmungen 25 und Nocken 24 Verwendung finden.

Fig. 7 zeigt schematisch eine Halterung 26, so wie man diese z. B. durch Klemmen in das Innere einer Kanne 13 einsetzen kann. Der Außenbereich ist zweckmäßig elastisch oder man arretiert die äußere Ringfläche der Halterung 26 mit bekannten Mitteln, z.B. durch Kleben. Innen ist Material 7 vorgesehen, und zwar eingesetzt im Rahmen 19, wobei der Rahmen 19 auf dem unteren Ring 28 aufliegt, während am oberen Ring 29 Nocken 24 vorgesehen sind. Am Rahmen 19 sind Ausnehmungen 25 angebracht, so daß ein System gegeben ist, wie in Fig. 6 beschrieben.

Sollte die obere Öffnung der Kanne 13 nicht groß genug sein, um die Rahmen 19 bzw. 6 einführen zu können, dann ergibt sich folgender Lösungsweg. Die Rahmen werden etwas kleiner gefertigt, als die obere Einfüllöffnung der Kanne 13 ausmacht. Da die Rahmen im Bauchbereich der Kanne dann keinen Halt finden, muß man dort eine entsprechende Ringfläche vorsehen, auf die man den Rahmen 19, 6 auflegt und dort vorzugsweise leicht lösbar arretiert (siehe die bekannten vorgeschriebenen Lösungswege dazu).

**PATENTANWALT**

**DR. WILHELM HASSE**

**DIPLOMINGENIEUR**

**0072434**

8000 MÜNCHEN, 29.7.1981/W

PGm 4479/Hi

## S t ü c k l i s t e

### (Bestandteil. der Anmeldung)

| | | |
|---|---|---|
| 1 | = | Kannenkopf |
| 2 | = | klappbarer Deckel |
| 3 | = | Lager |
| 4 | = | Material, das den Kannenkopf 1 bildet |
| 5 | = | umlaufende Nut |
| 6 | = | Rahmen zum Halten des Materials, wobei der Rahmen mindestens im Peripheriebereich elastisch sein soll |
| 7, 7a | = | feinmaschiges oder poröses Material z.B. Siebgeflecht, poröses Papier (z.B. Filterpapier) usw. |
| 8 | = | Gießer |
| 9 | = | Behälter z.B. aus Glas, Porzellan, Keramik usw., der mit dem Kannenkopf 1 die Kaffeekanne bilden kann |
| 10 | = | Hangriff |
| 11 | = | umlaufende vorzugsweise elastische Manschette (z.B. aus Kunststoff, Gummi usw.) als Verbindungs- bzw. Haltemittel zum Behälter 9 |
| 12 | = | Ausgießer (Tülle) |
| 13 | = | Kanne |
| 14 | = | aufsetzbarer Deckel |
| 15 | = | Verbindungsmittel, wie Stab, Zylinder usw. |
| 16 | = | umlaufende Wulst |
| 17 | = | umlaufende Wulst |
| 18 | = | Nut gebildet durch Vorsprünge z.B. umlaufende Wülste 16/17 |
| 19 | = | Gummiring, elastischer Rahmen, Halterung usw. |

0072434

- |2 -

| | | |
|---|---|---|
| 20 | = | Eintrittsöffnung am Gießer 12 |
| 21 | = | Bodensieb, Bodenfilter |
| 22 | = | Griff, Knauf |
| 23 | = | Aufnahmeraum für gemahlenen (pulverisierten) Kaffe |
| 24 | = | Nocken oder sonstige Vorsprünge, die am Kanneninnenrand vorgesehen sind |
| 25 | = | Ausnehmung |
| 26 | = | Halterung für Material 7, 7a, zum Einsetzen in eine Kanne |
| 27 | = | verschließbare Öffnung |
| 28 | = | Ring |
| 29 | = | Ring |

PATENTANWALT

**DR. WILHELM HASSE**

DIPLOMINGENIEUR

– 1 –

8000 MÜNCHEN, 29.7.1981/W

**0072434**

PGm 4479/Hi

P a t e n t a n s p r ü c h e

1. Vorrichtung für Kaffeekannen sowie Kaffeekannen, gekennzeichnet durch poröses (feinporöses, feinmaschiges), wasserdurchlässiges Material (7, 7a), das in

   der Kaffeekanne (z.B. Behälter (9)) – dem

   Ausgießer (8, 12) (also in Ausgießrichtung gesehen) vorgeschaltet – anbringbar ist.


2. Vorrichtung nach Anspruch 1,

   dadurch gekennzeichnet, daß das Material (7, 7a) in

   einer Halterung (6, 19) eingespannt ist, deren Außendurchmesser und äußere Form dem Innendurchmesser und der Form (innen) der Kanne (13) in der Einbringebene,

   z.B. Einspannstelle, entspricht.


3. Vorrichtung nach wenigstens einem der vorherigen Ansprüche,

   dadurch gekennzeichnet, daß das Material (7, 7a) ein feinstmaschiges Gitter (z.B. Draht-Siebgeflecht) und/ oder Papier (z.B. Filterpapier) und/oder Tuchfilter ist.

4. Vorrichtung nach wenigstens einem der vorherigen Ansprüche,

dadurch gekennzeichnet, daß mehrere Lagen des Materials (7, 7a) mit gleichem oder ungleichem Durchlässigkeitsgrad vorgesehen sind, z.B. übereinanderliegend als eine Einheit.

5. Vorrichtung nach wenigstens einem der vorherigen Ansprüche,

dadurch gekennzeichnet, daß das Material (7, 7a) plan eingespannt ist oder andere Formen (im Querschnitt gesehen) aufweist, z.B. Wellenform (linear, ringförmig; Fig. 2c), Zick-Zack-Form (Fig. 2b), nach einer Seite mehrfach bogenförmig verläuft (Fig. 2d), kontinuierlich fortlaufend U-förmig ausgebildet ist (Fig. 2a) usw.

6. Vorrichtung nach wenigstens einem der vorherigen Ansprüche,

dadurch gekennzeichnet, daß am Material (7, 7a) ein Griff und/oder eine verschließbare Öffnung (27) vorgesehen ist.

7. Vorrichtung insbesondere nach Anspruch 1, dadurch gekennzeichnet, daß im Verlauf der Peripherie des Materials (7, 7a) z.B. im Rahmen (19) Ausnehmun-

gen (25) vorgesehen sind und daß in der Ebene, wo das Material (7, 7a) zu fixieren ist, innen an der Kanne (13) im gleichen Abstand die Ausnehmungen (25), die gleiche Anzahl Vorsprünge, z.B. Nocken (24) angebracht sind (diese etwas kleiner als die als Durchtrittsöffnung dienenden Ausnehmungen (25)).

8. Vorrichtung insbesondere nach Anspruch 1, gekennzeichnet durch einen Kannenkopf (1), der

   a) Befestigungsmittel (Manschetten, Gewinde, Preßring usw.) zum Halten (oben) auf der Kanne (13),

   b) einen Ausgießer (8),

   c) eine Aufnahme (z.B. Ringfläche, umlaufende Nut(5, 13), umlaufende im Abstand vorgesehene Wülste (16, 17) für das Material (7, 7a) und (gegebenenfalls)

   d) einen klapp- oder abnehmbaren Deckel (2) und/oder Handgriff aufweist.

9. Vorrichtung nach wenigstens einem der vorherigen Ansprüche,

   dadurch gekennzeichnet, daß das Material (7, 7a) in einen Rahmen eingespannt ist, z.B. in einen elastischen Ring (6, 19), wobei der Rahmen eine geeignete Querschnittsform (rund, mehreckig, oval usw.) aufweisen kann.

10. Vorrichtung insbesondere nach Anspruch 1,

dadurch gekennzeichnet, daß der Kanne (13) ein Boden-filter (21), angeordnet im Abstand zur Bodenfläche des Behälters (9), zugeordnet ist.


11. Vorrichtung nach wenigstens einem der vorherigen Ansprüche,

dadurch gekennzeichnet, daß das Material (7) im Deckel oder im Abstand (z.B. mittels Stab (15)) am Deckel (14) befestigt ist.


12. Vorrichtung nach wenigstens einem der vorherigen Ansprüche,

dadurch gekennzeichnet, daß das Material (7, 7a) in Nuten (z.B. ringförmige Nut (5)) oder Auflagen (z.B. umlaufende Wulst (17)) oder zwischen zwei Halterungen (z.B. umlaufende Wülste (16, 17) gehalten ist, wobei diese Haltemittel an/in der Innenfläche der Kanne (13) vorgesehen sind.


13. Vorrichtung insbesondere nach Anspruch 1, gekennzeichnet durch eine an einer Stelle in die Kanne (13) innen einsetzbare Halterung (26), die zu Aufnahme des Materials (7, 7a) dient (Fig. 7).

14. Vorrichtung nach Anspruch 7 und 13,

dadurch gekennzeichnet, daß die Halterung (26) ein umlaufender U-förmiger (im Querschnitt) Ring ist, wobei der (eingesetzt in die Kanne (13)) obere Ring (29) Nocken (24) aufweist und der untere Ring (28) eine geringere lichte Weite hat als der Außendurchmesser des Materials (7, 7a) ausmacht, und daß an der Peripherie des Rahmens (19) Ausnehmungen (25) vorgesehen sind.

15. Vorrichtung nach wenigstens einem der vorherigen Ansprüche,

dadurch gekennzeichnet, daß das Material (7, 7a) unmittelbar an der Innenwand der Kanne (13) oder im Kannenkopf (1) oder im Deckel (14) befestigt ist.

16. Vorrichtung nach wenigstens einem der vorherigen Ansprüche,

dadurch gekennzeichnet, daß das Material (7, 7a) z.B. mit Vorspannung direkt oder mit seinem Rahmen (als Preßsitz) an der Innenwand der Kanne (13) oder im Kannenkopf (1) oder im Deckel (14) eingesetzt ist.

17. Vorrichtung nach wenigstens einem der vorherigen Ansprüche,

dadurch gekennzeichnet, daß das Material (7, 7a) ähnlich einem Napf oder Halbschale geformt ist.

18. Vorrichtung insbesondere nach Anspruch 1, dadurch gekennzeichnet, daß im Material eine Rinne
(z.B. konisch z.B. in Richtung des Gießers (8, 12)
sich verjüngend) vorgesehen (eingepreßt) ist, um den
Fluß der Kaffeeflüssigkeit in Richtung zum Gießer (8,
12) begünstigt zu lenken.

FIG.1

FIG.2

a   b   c

d

FIG.3

FIG.5

FIG.4

FIG.6

FIG.7

00724434

Europäisches
Patentamt

**EUROPÄISCHER RECHERCHENBERICHT**

Nummer der Anmeldung

EP 82 10 6349

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| | --- | | A 47 J 31/20 |
| X | GB-A- 959 805 (FARROW & JACKSON LTD.) <br><br> * Insgesamt * | 1-3,5, 9,11- 13,15 | A 47 J 31/14 |
| | --- | | |
| X | GB-A- 689 241 (FRYC) <br><br> * Insgesamt * | 1-3,5- 7,9,11 ,15 | |
| | --- | | |
| X | FR-A-1 410 149 (MOUCHOT) <br> * Insgesamt * | 1-6,15 ,16 | |
| | --- | | |
| X | CH-A- 443 596 (MOUCHOT) <br><br> * Insgesamt * | 1-6,10 ,15,16 | |
| | --- | | RECHERCHIERTE SACHGEBIETE (Int. Cl. 3) |
| X | GB-A- 759 903 (KASAKOFF) <br> * Figuren 3,8 * | 1,3 | A 47 J <br> A 47 G |
| | --- | | |
| X | CH-A- 424 125 (SCHLEH) <br><br> * Insgesamt * | 1,3,5, 12,15, 16 | |
| | --- | | |
| A | GB-A- 416 492 (GIUSTI) <br><br> * Insgesamt * | 1,3,5, 6,9,15 ,16 | |
| | ---     -/- | | |

Der vorliegende Recherchenbericht wurde für alle Patentansprüche erstellt.

| Recherchenort | Abschlußdatum der Recherche | Prüfer |
|---|---|---|
| DEN HAAG | 10-11-1982 | SCHARTZ J. |

Europäisches
Patentamt

**EUROPÄISCHER RECHERCHENBERICHT**

**0072434**
Nummer der Anmeldung

EP  82 10 6349

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-1 636 179  (GEHLERT) <br> * Figuren 2,3 * <br><br> ----- | 7 | |

RECHERCHIERTE
SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 10-11-1982 | SCHARTZ J. |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsatze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82